# EUROPÄISCHE PATENTSCHRIFT

(11) **EP 0 459 259 B1**
(45) Veröffentlichungstag und Bekanntmachung des Hinweises auf die Patenterteilung: **30.11.1994**
(21) Anmeldenummer: 91108085.1
(22) Anmeldetag: 18.05.1991
(51) Int. Cl.: C09B 45/28

(54) **Disazofarbstoffe**
Disazo dyes
Colorants disazoiques

(30) Priorität: 31.05.1990 DE 4017569
(43) Veröffentlichungstag der Anmeldung: 04.12.1991
(73) Patentinhaber: BAYER AG, 51368 Leverkusen (DE)
(72) Erfinder: Hinrichs, Rolf, Dr., W-5090 Leverkusen 1 (DE); Kunde, Klaus, Dr., W-5206 Neuenkirchen 1 (DE)

(56) Entgegenhaltungen:
- EP-A- 0 301 350
- DE-A- 3 236 238
- CHEMICAL ABSTRACTS, Band 98, Nr. 10, März 1983, Seite 76, Zusammenfassung Nr.73825f, Columbus, Ohio, US; & JP-A-57 145 155 (NIPPON KAYAKU CO., LTD) 08-09-1982

## Beschreibung

Die vorliegende Erfindung betrifft neue Disazofarbstoffe der Formel (I) 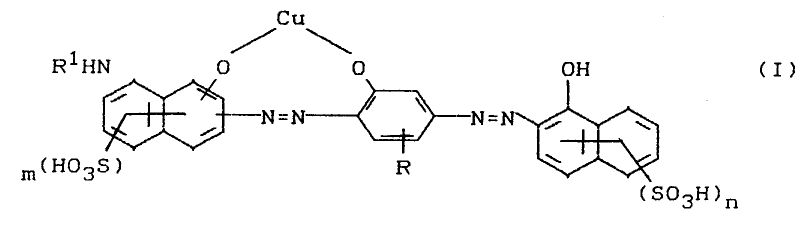
und deren Salze,
in welcher
- R: für Wasserstoff, C₁-C₆-Alkyl oder C₁-C₆-Alkoxy steht,
- R¹: für Wasserstoff, C₁-C₆-Alkyl, C₁-C₆-Alkylcarbonyl, C₁-C₆-Alkylsulfonyl, C₆-C₁₀-Arylcarbonyl, C₆-C₁₀-Arylsulfonyl, C₆-C₁₀-Aryl-C₁-C₆-alkyl, C₆-C₁₀-Aryl-C₁-C₆-alkylcarbonyl oder Aminocarbonyl steht,
- m: für 1 oder 2 steht und
- n: für 1 oder 2 steht,
worin die genannten Substituenten ihrerseits durch in der Farbstoffchemie übliche nichtionische Reste, Carbon- und Sulfonsäuregruppen substituiert sein können,
und wobei das O-Atom, welches an das Kupfer gebunden ist, entweder in 1- oder 2-Stellung des Naphthylringes gebunden ist, und sich die Azobrücke dazu stets in ortho-Position befindet, sowie Verfahren zu ihrer Herstellung und ihre Verwendung zum Färben von cellulosehaltigen Materialien und Leder.

Bevorzugte Substituenten bzw. Bereiche der in den oben und nachstehend erwähnten Formeln aufgeführten Reste werden im folgenden erläutert:

Für Alkyl in der Definition von R und R¹ in den allgemeinen Formeln und in zusammengesetzten Begriffen wie Alkylcarbonyl und Alkylsulfonyl, steht für geradkettiges oder verzweigtes Alkyl, vorzugsweise mit 1 bis 4, Kohlenstoffatomen. Beispielhaft seien Methyl, Ethyl, n-Propyl, i-Propyl, n-Butyl, s-Butyl, i-Butyl und t-Butyl genannt.

Unter dem Begriff Alkoxy in der Definition von R in den allgemeinen Formeln ist geradkettiges oder verzweigtes Alkoxy, insbesondere mit 1 bis 4, Kohlenstoffatomen zu verstehen. Beispielhaft seien Methoxy, Ethoxy, Propoxy, Butoxy sowie ihre Isomeren, i-Propoxy, i-, s-und t-Butoxy genannt.

Unter dem Begriff unsubstituiertes oder substituiertes Aryl in der Definition von R¹ in zusammengesetzten Begriffen wie Arylcarbonyl und Arylsulfonyl ist Aryl mit 6 bis 10 Kohlenstoffatomen im Arylteil zu verstehen. Beispielhaft und vorzugsweise seien unsubstituiertes oder substituiertes Phenyl oder Naphthyl, insbesondere Phenyl, genannt.

Unsubstituiertes oder substituiertes Aralkyl in der Definition von R¹ in den allgemeinen Formel oder in dem zusammengesetzten Begriff Aralkylcarbonyl enthält 1 bis 6, insbesondere 1 bis 4, Kohlenstoffatome im geradkettigen oder verzweigten Alkylteil und vorzugsweise Phenyl als Arylteil. Als Aralkylgruppen seien beispielhaft und vorzugsweise Benzyl und Phenethyl genannt.

In der Formel (I) wird vorzugsweise unter Aryl Phenyl und unter Aralkyl Benzyl verstanden.

Beispiele für nichtionische Reste sind Halogen, Hydroxy, C₁-C₄-Alkoxy, Acetoxy und im Falle von Arylresten auch C₁-C₄-Alkyl.

Bevorzugt sind Farbstoffe der Formel (I), in welchen
- R: für Wasserstoff, C₁-C₄-Alkyl oder C₁-C₄-Alkoxy steht,
- R¹: für Wasserstoff, C₁-C₄-Alkyl, C₁-C₄-Alkylcarbonyl, C₁-C₄-Alkylsulfonyl, Phenylcarbonyl, Benzyl, Phenylsulfonyl oder Benzylcarbonyl, deren Phenylreste durch -SO₃H oder -COOH substituiert sein können, oder Aminocarbonyl steht,
- m: für 1 oder 2 steht,
- n: für 1 oder 2 steht, und
die Summe von m und n 2 oder 3 ist.

Im Rahmen der Formel (I) besonders bevorzugte Farbstoffe sind solche der Formel (II) 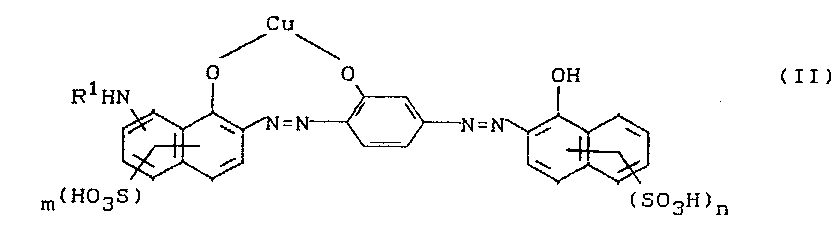
und deren Salze,
in welcher
- R¹: für Wasserstoff, C₁-C₂-Alkyl, C₁-C₂-Alkylcarbonyl, C₁-C₂-Alkylsulfonyl oder Phenylcarbonyl, welches durch -SO₃H oder -COOH substituiert sein kann, oder Aminocarbonyl steht,
- m: für 1 oder 2 steht,
- n: für 1 oder 2 steht, und
die Summe von m und n 2 oder 3 ist.

Im Rahmen der Formel (I) besonders hervorzuheben sind solche Farbstoffe der Formel (III) 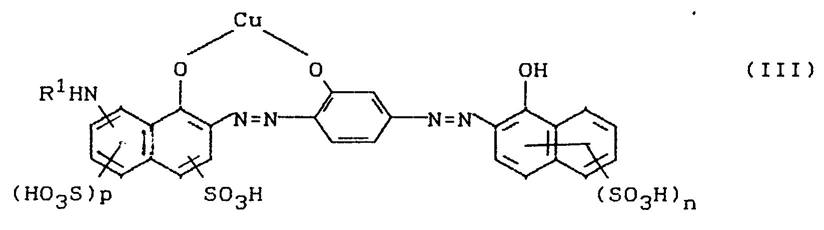
und deren Salze
in welcher
- R¹: für Wasserstoff, C₁-C₄-Alkyl, C₁-C₄-Alkylcarbonyl, C₁-C₄-Alkylsulfonyl, Phenylcarbonyl, Phenylsulfonyl oder Benzylcarbonyl, deren Phenylreste durch -SO₃H oder -COOH substituiert sein können, oder Aminocarbonyl steht,
- n: für 1 oder 2 steht,
- p: für 0 oder 1 steht, und
die Summe von n und p 1 oder 2 ist.

Im Rahmen der Formel (I) ganz besonders hervorzuheben sind solche Farbstoffe der Formel (III), in welcher
- R¹: für Methyl, Ethyl, Acetyl, Propionyl oder Phenylcarbonyl steht,
- n: für 1 steht, und
- p: für 0 steht.

Die Farbstoffe werden im allgemeinen in Form ihrer Salze zum Färben eingesetzt oder auch in den Handel gebracht, insbesondere der Alkalisalze (Li, Na, K), der Ammoniumsalze, Mono-, Bis- oder Tris-C₁-C₄-alkyl-ammoniumsalze, insbesondere auch der C₁-C₄-Alkanol-ammoniumsalze.

Bevorzugte Ammoniumsalze sind dabei solche mit dem Kation 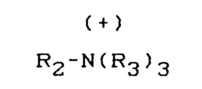
worin
- R₂: H, C₁-C₄-Alkyl, gegebenenfalls substituiert durch OH oder Hydroxy-C₁-C₄-alkoxy, insbesondere CH₃, C₂H₅, CH₂-CH₂-OH, CH₂-CH(OH)CH₃, CH₂-CH₂-OCH₂-CH₂-OH,
- R₃: C₁-C₄-Hydroxyalkyl, C₁-C₄-Hydroxyalkoxy-alkyl, insbesondere CH₂-CH₂-OH, CH₂-CH(OH)CH₃, CH₂-CH₂-OCH₂-CH₂-OH bedeuten.

Die Farbstoffe können auch als konzentrierte, wäßrige Lösungen mit einem Gehalt von 5 bis 30 %, vorzugsweise 10 bis 20 % eingesetzt werden.

Die neuen Disazofarbstoffe der Formel (I) können hergestellt werden, indem man Verbindungen der Formel (IV) 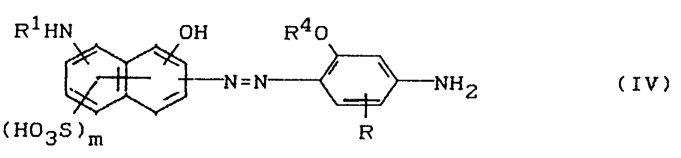
in welcher
- R, R¹ und m: die oben angegebene Bedeutung haben, und
- R⁴: für C₁-C₄-Alkyl steht,
und wobei das O-Atom, welches an das Kupfer gebunden ist, entweder in 1- oder 2-Stellung des Naphthylringes gebunden ist, und sich die Azobrücke dazu stets in ortho-Position befindet, diazotiert, und mit Verbindungen der Formel (V) 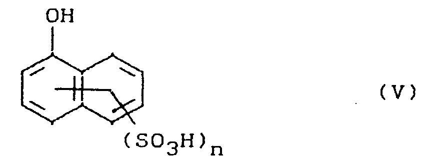
in welcher
- n: die oben angegebene Bedeutung hat,
kuppelt, und die so erhaltenen Farbstoffe der Formel (VI) 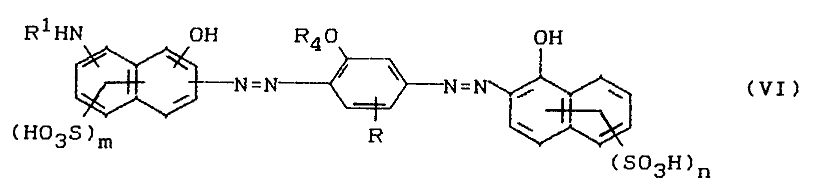
in welcher
- R, R¹, R⁴, m und n: die oben angegebene Bedeutung haben,
und wobei das O-Atom, welches an das Kupfer gebunden ist, entweder in 1- oder 2-Stellung des Naphthylringes gebunden ist, und sich die Azobrücke dazu stets in ortho-Position befindet, mit Kupfer-(II)-Salzen behandelt.

Die Verbindungen der Formel (IV) erhält man in an sich bekannter Weise, z.B. durch Reduktion der Verbindungen der Formel (VII) 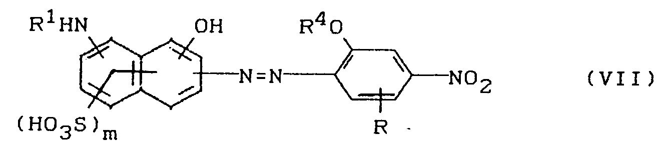
in welcher
- R, R¹, R⁴ und m: die oben angegebene Bedeutung haben,
und wobei das O-Atom, welches an das Kupfer gebunden ist, entweder in 1- oder 2-Stellung des Naphthylringes gebunden ist, und sich die Azobrücke dazu stets in ortho-Position befindet, beispielsweise mit Natrium- oder Ammoniumsulfid.

Die Verbindungen der Formel (VII) sind erhältlich durch Diazotierung von Verbindungen der Formel 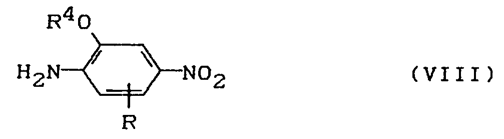
in welcher
- R und R⁴: die oben angegebene Bedeutung haben,
und Kupplung mit Naphtholsulfonsäuren der Formel (IX) 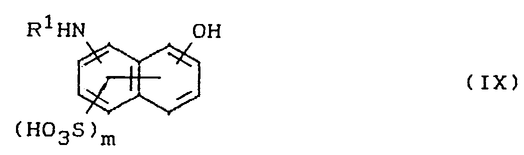
in welcher
- R¹ und m: die oben angegebene Bedeutung haben.
Beispiele für Verbindungen der Formel (IX) sind N-Acetyl- und N-Benzoyl-Derivate folgender Aminonaphtholmono- und - disulfonsäuren:
4-Hydroxy-6-aminonaphthalin-2-sulfonsäure
4-Hydroxy-7-aminonaphthalin-2-sulfonsäure
5-Hydroxy-4-aminonaphthalin-1-sulfonsäure
4-Hydroxy-5-aminonaphthalin-2-sulfonsäure
4-Hydroxy-8-aminonaphthalin-2-sulfonsäure
4-Hydroxy-7-aminonaphthalin-1-sulfonsäure
4-Hydroxy-6-aminonaphthalin-1-sulfonsäure
4-Hydroxy-7-aminonaphthalin-1,5-disulfonsäure
5-Hydroxy-2-aminonaphthalin-1,7-disulfonsäure
5-Hydroxy-3-aminonaphthalin-2,7-disulfonsäure
4-Hydroxy-5-aminonaphthalin-2,7-disulfonsäure
5-Hydroxy-4-aminonaphthalin-1,7-disulfonsäure
5-Hydroxy-4-aminonaphthalin-1,3-disulfonsäure
4-Hydroxy-6-methylaminonaphthalin-2-sulfonsäure
4-Hydroxy-7-methylaminonaphthalin-2-sulfonsäure
sowie die freien Aminonaphtholsulfonsäuren:
4-Hydroxy-6-anilinonaphthalin-2-sulfonsäure
4-Hydroxy-7-anilinonaphthalin-2-sulfonsäure und
4-Hydroxy-6-(3-sulfophenylanilinonaphthalin)-2-sulfonsäure.

Als Kupplungskomponenten der Formel (V) werden beispielsweise folgende Hydroxynaphthalinmono- und - disulfonsäuren verwendet:
4-Hydroxynaphthalin-1-sulfonsäure
5-Hydroxynaphthalin-1-sulfonsäure
4-Hydroxynaphthalin-2-sulfonsäure
4-Hydroxynaphthalin-2,7-disulfonsäure
4-Hydroxynaphthalin-1,5-disulfonsäure
4-Hydroxynaphthalin-2,5-disulfonsäure.

Die Verbindungen der allgemeinen Formel (IV) können direkt oder indirekt diazotiert werden. Die Kupplung erfolgt bei pH-Werten zwischen 6 und 10, vorzugsweise zwischen 8 und 9 bei Temperaturen zwischen 0°C und 30°C.

Die Acylaminogruppen NHR₁ können nach bekannten Verfahren in die freie Aminogruppe überführt werden.

Die Überführung in die Kupferkomplexe erfolgt in an sich bekannter Weise, indem man die Farbstoffe der allgemeinen Formel (VI) in wäßriger Lösung mit Kupfer-(II)-Salzen, z.B. Kupfer-(II)-sulfat oder Kupfer-(II)-acetat, in Gegenwart einer Base, z.B. eines Alkanolamins, erhitzt.

Die Farbstoffe werden z.B. nach Zugabe von Salz isoliert und getrocknet. Es können aber auch die Kupplungslösungen oder Suspensionen über einen Walzen- oder Sprühtrockner geführt werden.

Ebensogut können aus den feuchten Pasten der Farbstoffe konzentrierte, wäßrige Lösungen hergestellt werden z.B. indem man Suspensionen dieser Farbstoffe in Wasser einer Entsalzung, z.B. durch Druckpermeation unterwirft.

Die Farbstoffe färben cellulosehaltige Materialien, insbesondere Papier, Baumwolle und Viskose sowie Leder in blauen Tönen mit guten Naß- und Lichtechtheiten.

Die Farbstoffe können nach allen in der Papier- und Textilindustrie für substantive Farbstoffe gebräuchlichen Verfahren verwendet werden, insbesondere in der Massewie in der Oberflächenfärbung von Papier für geleimte und ungeleimte Sorten, ausgehend von gebleichtem oder ungebleichtem Zellstoff verschiedener Provenienz wie Nadel- oder Laubholz-sulfit- und/oder -Sulfat-Zellstoff. Sie können auch in der Garn- oder Stückfärberei von Baumwolle, Viskose und Leinen nach dem Ausziehverfahren aus langer Flotte oder in Kontinueverfahren angewandt werden.

Beim Färben von Leder gelangen die Farbstoffe bevorzugt als Flüssigpräparationen zur Anwendung, die sich gleichmäßig zum Spritzfärben und zum Färben im Faß und auf Durchlauf-Mehrzweckmaschinen eignen.

Die mit den erfindungsgemäßen Farbstoffen erhaltenen Papierfärbungen zeichnen sich durch gute Licht- und Naßechtheit (Ausblutechtheit) sowie Säure-, Alkali- und Alaun-Echtheit aus. Auch auf die Brillanz und Klarheit der Farbtöne ist hinzuweisen. Ferner ist das Kombinationsverhalten mit geeigneten Farbstoffen sehr gut.

### Beispiele

### Beispiel 1

62,3 g der Verbindung der Formel 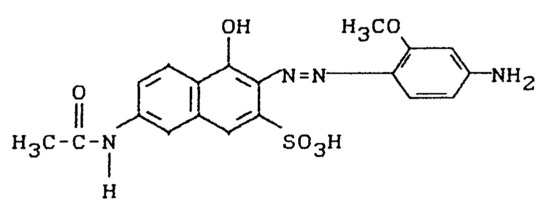
werden in
800 ml Wasser neutral gelöst und mit
10 g NaNO₂ versetzt; diese Lösung läßt man bei 0°C bis 5°C in eine Vorlage von
50 ml konzentrierter Salzsäure und
200 g Eis eintropfen.
32,4 g 4-Hydroxynaphthalin-1-sulfonsäure werden in
400 ml Wasser bei 10°C mit
8 g NaOH gelöst. Zu dieser Lösung gibt man langsam die Suspension der Diazoniumverbindung zu, wobei der pH-Wert durch Zugabe von Soda-Lösung zwischen 7 und 8 gehalten wird. Nach der Kupplung wird bei 50°C eine Lösung von
40 g Kupfersulfat x 5 H₂O in
200 ml Wasser und
80 g Diethanolamin zur Farbstofflösung gegeben, dann wird 10 h bei 95°C gerührt. Nach Beendigung der Kupferung wird der Farbstoff durch Zugabe von
250 g Salz ausgefällt, isoliert und getrocknet.

Er färbt Baum- und Zellwolle, Papier und Leder in blauen Tönen.

### Beispiele 2 bis 7

Verwendet man statt der in Beispiel 1 eingesetzten Kupplungskomponente äquimolare Mengen
5-Hydroxynaphthalin-1-sulfonsäure
4-Hydroxynaphthalin-2-sulfonsäure
8-Hydroxynaphthalin-1-sulfonsäure
4-Hydroxynaphthalin-2,7-disulfonsäure
4-Hydroxynaphthalin-1,5-disulfonsäure oder
4-Hydroxynaphthalin-2,5-disulfonsäure,
so erhält man ebenfalls Kupferkomplex-Farbstoffe, die Baum- und Zellwolle, Papier und Leder in blauen Tönen färben.

### Beispiele 8 bis 14

Man verfährt wie in den Beispielen 1 bis 7, setzt aber nach Beendigung der Kupferung 64 g NaOH zu und erwärmt drei Stunden auf 95°C, wobei die Acetylreste abgespalten werden, ehe man das Produkt ausfällt und isoliert, und erhält einen Farbstoff, der Baum- und Zellwolle, Papier und Leder in blauen Tönen färbt.

### Beispiel 15

71,3 g der Verbindung der Formel 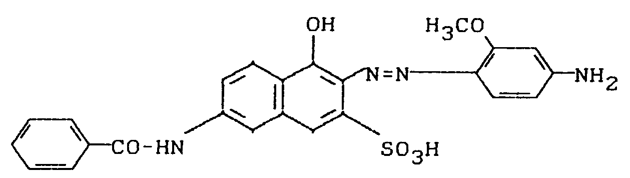
werden in
2.000 ml Wasser neutral gelöst und mit
10 g NaNO₂ versetzt; diese Lösung läßt man bei 0°C bis 5°C in eine Vorlage von
50 ml konzentrierter Salzsäure und
500 g Eis eintropfen.
44,1 g 4-Hydroxynaphthalin-2,7-disulfonsäure werden in
500 ml Wasser bei 10°C neutral gelöst; zu dieser Lösung läßt man die Suspension der Diazoniumverbindung zutropfen, wobei man den pH-Wert mit Hilfe von Sodalösung zwischen 7 und 8 hält. Nach der Kupplung wird bei 50°C eine Lösung von
40 g Kupfersulfat x 5 H₂O in
200 ml Wasser und
80 g Diethanolamin zur Farbstofflösung gegeben, dann wird 10 h bei 95°C gerührt. Nach Beendigung der Kupferung wird der Farbstoff durch Zugabe von
450 g Salz ausgefällt, isoliert und getrocknet.

Er färbt Baum- und Zellwolle, Papier und Leder in blauen Tönen.

### Beispiele 16 bis 21

Verwendet man statt der in Beispiel 15 eingesetzten Kupplungskomponente äquimolare Mengen
4-Hydroxynaphthalin-2-sulfonsäure
5-Hydroxynaphthalin-1-sulfonsäure
8-Hydroxynaphthalin-1-sulfonsäure
4-Hydroxynaphthalin-2,7-disulfonsäure
4-Hydroxynaphthalin-1,5-sulfonsaure oder
4-Hydroxynaphthalin-2,5-disulfonsäure,
so erhält man ebenfalls Kupferkomplex-Farbstoffe, die Baum- und Zellwolle, Papier und Leder in blauen Tönen färben.

## Patentansprüche

1. Disazofarbstoffe der Formel 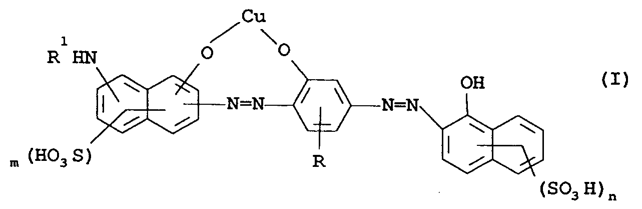 und deren Salze,
in welcher
R für Wasserstoff, C₁-C₆-Alkyl oder C₁-C₆-Alkoxy steht,
R¹ für Wasserstoff, C₁-C₆-Alkyl, C₁-C₆-Alkylcarbonyl, C₁-C₆-Alkylsulfonyl, C₆-C₁₀-Arylcarbonyl, C₆-C₁₀-Arylsulfonyl, C₆-C₁₀-Aryl-C₁-C₆-alkyl, C₆-C₁₀-Aryl-C₁-C₆-alkylcarbonyl oder Aminocarbonyl steht,
m für 1 oder 2 steht und
n für 1 oder 2 steht,
worin die genannten Substituenten ihrerseits durch Halogen, Hydroxy, C₁-C₄-Alkoxy, Acetoxy, Carbon- und Sulfonsäuregruppen substituiert sein können und im Falle der Arylreste diese auch durch C₁-C₄-Alkyl substituiert sein können,
und wobei das O-Atom, welches an das Kupfer gebunden ist, entweder in 1- oder 2-Stellung des Naphthylringes gebunden ist, und sich die Azobrücke dazu stets in ortho-Position befindet.

2. Farbstoffe des Anspruchs 1, worin
R für Wasserstoff, C₁-C₄-Alkyl oder C₁-C₄-Alkoxy steht,
R¹ für Wasserstoff, C₁-C₄-Alkyl, C₁-C₄-Alkylcarbonyl, C₁-C₄-Alkylsulfonyl, Phenylcarbonyl, Benzyl, Phenylsulfonyl oder Benzylcarbonyl, deren Phenylreste durch -SO₃H oder -COOH substituiert sein können, oder Aminocarbonyl steht,
m für 1 oder 2 steht,
n für 1 oder 2 steht, und
die Summe von m und n 2 oder 3 ist.

3. Farbstoffe des Anspruchs 1 der Formel 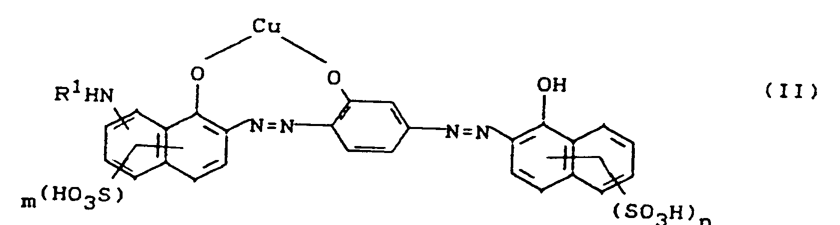 und deren Salze,
in welcher
R¹ für Wasserstoff, C₁-C₂-Alkyl, C₁-C₂-Alkylcarbonyl, C₁-C₂-Alkylsulfonyl oder Phenylcarbonyl welches durch -SO₃H oder -COOH substituiert sein kann, oder Aminocarbonyl steht,
m für 1 oder 2 steht,
n für 1 oder 2 steht, und
die Summe von m und n 2 oder 3 ist.

4. Farbstoffe des Anspruchs 1 der Formel 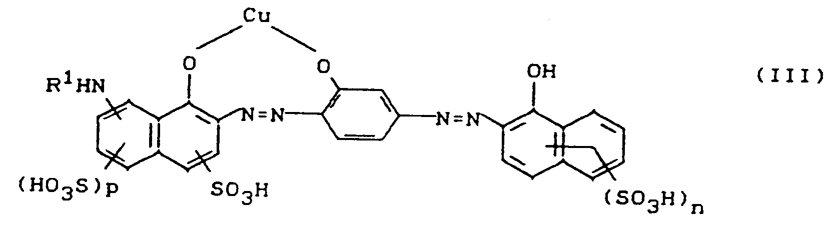 und deren Salze
in welcher
R¹ für Wasserstoff, C₁-C₄-Alkyl, C₁-C₄-Alkylcarbonyl, C₁-C₄-Alkylsulfonyl, Phenylcarbonyl, Phenylsulfonyl oder Benzylcarbonyl, deren Phenylreste durch -SO₃H oder -COOH substituiert sein können, oder Aminocarbonyl steht,
n für 1 oder 2 steht,
p für 0 oder 1 steht, und
die Summe von n und p 1 oder 2 ist.

5. Farbstoffe des Anspruchs 4 der Formel (III), worin
R¹ für Methyl, Ethyl, Acetyl, Propionyl oder Phenylcarbonyl steht,
n für 1 steht, und
p für 0 steht.

6. Farbstoffe des Anspruchs 1 der Formel

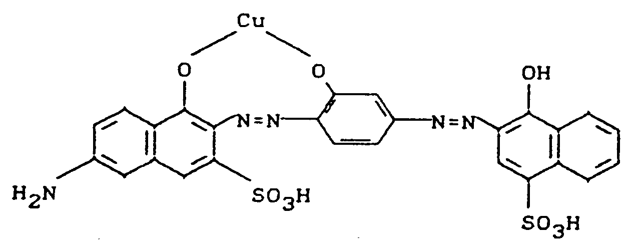

7. Verfahren zur Herstellung von Farbstoffen des Anspruchs 1, dadurch gekennzeichnet, daß man Verbindungen der Formel 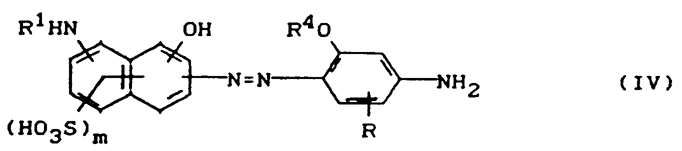 in welcher
R, R¹ und m die oben angegebene Bedeutung haben, und
R⁴ für C₁-C₄-Alkyl steht,
und wobei das O-Atom, welches an das Kupfer gebunden ist, entweder in 1- oder 2-Stellung des Naphthylringes gebunden ist, und sich die Azobrücke dazu stets in ortho-Position befindet.
diazotiert, und mit Verbindungen der Formel (V) 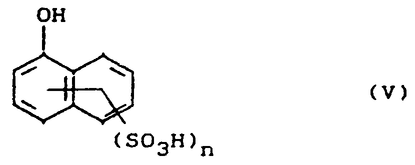 in welcher
n die in Anspruch 1 angegebene Bedeutung hat,
kuppelt, und die so erhaltenen Farbstoffe der Formel 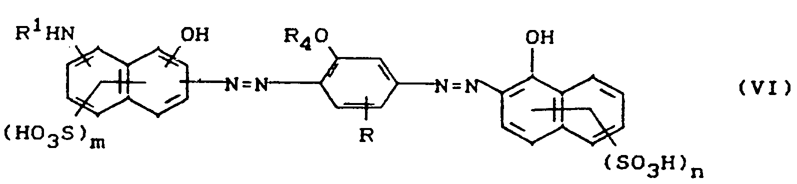 in welcher
R, R¹, m und n die in Anspruch 1 angegebene Bedeutung haben, und
R⁴ für C₁-C₄-Alkyl steht,
und wobei das O-Atom, welches an das Kupfer gebunden ist, entweder in 1- oder 2-Stellung des Naphthylringes gebunden ist, und sich die Azobrücke dazu stets in ortho-Position befindet.
mit Kupfer-(II)-Salzen behandelt.

8. Verwendung der Farbstoffe der Ansprüche 1 bis 6 zum Färben von cellulosehaltigen Materialien.

9. Verwendung der Farbstoffe der Ansprüche 1 bis 6 zum Färben von Leder.

10. Konzentrierte Farbstofflösungen, dadurch gekennzeichnet, daß sie einen Farbstoff der Formel (I) enthalten.

## Claims

1. Disazo dyestuffs of the formula 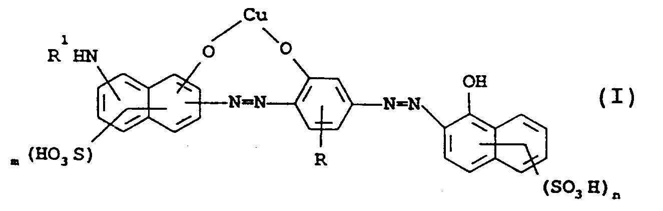 and salts thereof,
in which
R represents hydrogen, C₁-C₆-alkyl or C₁-C₆-alkoxy,
R¹ represents hydrogen, C₁-C₆-alkyl, C₁-C₆-alkylcarbonyl, C₁-C₆-alkylsulphonyl, C₁-C₆-arylcarbonyl, C₁-C₆-arylsulphonyl, C₆-C₁₀-aryl-C₁-C₆-alkyl, C₆-C₁₀-aryl-C₁-C₆-alkylcarbonyl or aminocarbonyl,
m represents 1 or 2 and
n represents 1 or 2,
and wherein the substituents mentioned can in turn be substituted by halogen, hydroxyl, C₁-C₄-alkoxy, acetoxy, carboxylic and sulphonic acid groups and in the case of the aryl radicals these can also be substituted by C₁-C₄-alkyl,
and where the oxygen atom attached to the copper is attached in either the 1- or 2-position of the naphthyl ring system and the azo bridge is always located ortho to it.

2. Dyestuffs of Claim 1, wherein
R represents hydrogen, C₁-C₄-alkyl or C₁-C₄-alkoxy,
R¹ represents hydrogen, C₁-C₄-alkyl, C₁-C₄-alkylcarbonyl, C₁-C₄-alkylsulphonyl, phenylcarbonyl, benzyl, phenylsulphonyl or benzylcarbonyl, the phenyl radicals of which can be substituted by -SO₃H or -COOH, or aminocarbonyl,
m represents 1 or 2,
n represents 1 or 2 and
the sum of m and n is 2 or 3.

3. Dyestuffs of Claim 1 of the formula 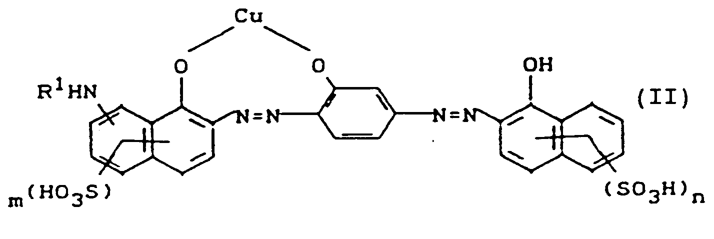 and salts thereof,
in which
R¹ represents hydrogen, C₁-C₂-alkyl, C₁-C₂-alkylcarbonyl, C₁-C₂-alkylsulphonyl or phenylcarbonyl which can be substituted by -SO₃H or -COOH, or aminocarbonyl,
m represents 1 or 2,
n represents 1 or 2 and
the sum of m and n is 2 or 3.

4. Dyestuffs of Claim 1, of the formula 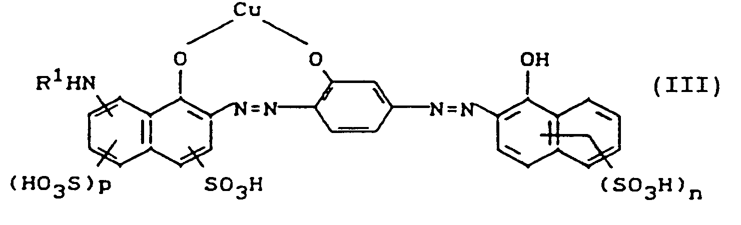 and salts thereof,
in which
R¹ represents hydrogen, C₁-C₄-alkyl, C₁-C₄-alkylcarbonyl, C₁-C₄-alkylsulphonyl, phenylcarbonyl, phenylsulphonyl or benzylcarbonyl, the phenyl radicals of which can be substituted by -SO₃H or -COOH, or aminocarbonyl,
n represents 1 or 2,
p represents 0 or 1 and
the sum of n and p is 1 or 2.

5. Dyestuffs of Claim 4, of the formula (III), wherein
R¹ represents methyl, ethyl, acetyl, propionyl or phenylcarbonyl,
n represents 1 and
p represents 0.

6. Dyestuffs of Claim 1, of the formula

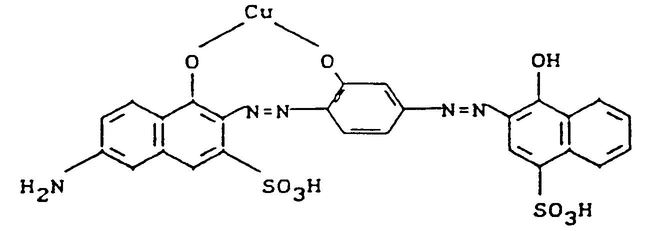

7. Process for the preparation of dyestuffs of Claim 1, characterized in that compounds of the formula 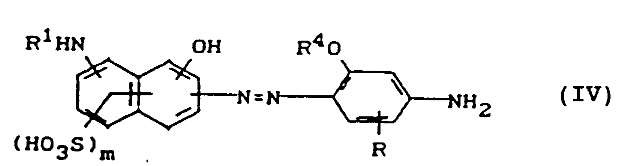 in which
R, R¹ and m have the abovementioned meaning and
R⁴ represents C₁-C₄-alkyl,
and where the oxygen atom attached to the copper is attached in either the 1- or 2-position of the naphthyl ring system and the azo bridge is always located ortho to it.
are diazotized, the diazotization products are coupled with compounds of the formula (V) 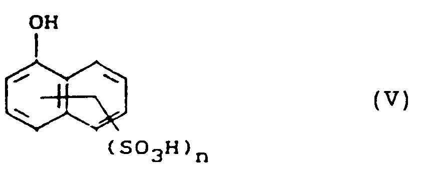 in which
n has the meaning given in Claim 1,
and the dyestuffs thus obtained, of the formula 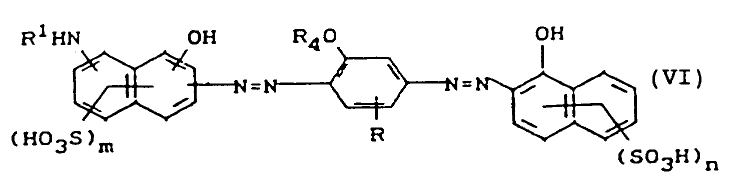 in which
R, R¹, R⁴, m and n have the meaning given in Claim 1, and
R⁴ represents C₁-C₄-alkyl,
and where the oxygen atom attached to the copper is attached in either the 1- or 2-position of the naphthyl ring system and the azo bridge is always located ortho to it.
are treated with copper(II) salts.

8. Use of the dyestuffs of Claims 1 to 6 for dyeing cellulose-containing materials.

9. Use of the dyestuffs of Claims 1 to 6 for dyeing leather.

10. Concentrated dyestuff solutions, characterized in that they contain a dyestuff of the formula (I).

## Revendications

1. Colorants disazoïques de formule : 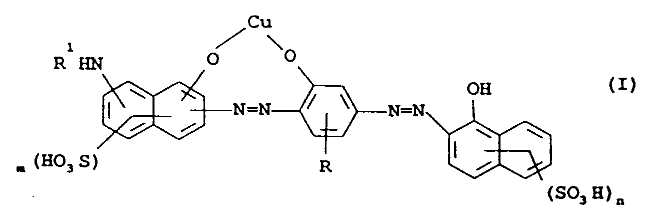 et leurs sels,
dans lesquels
R représente un atome d'hydrogène, un groupe alkyle en C₁-C₆ ou alcoxy en C₁-C₆,
R¹ représente un atome d'hydrogène, un groupe alkyle en C₁-C₆, alkyl(en C₁-C₆)-carbonyle, alkylsulfonyle en C₁-C₆, aryl(en C₆-C₁₀)-carbonyle, arylsulfonyle en C₆-C₁₀, aryl(en C₆-C₁₀)-alkyle (en C₁-C₆), aryl(en C₆-C₁₀)-alkyl(en C₁-C₆)-carbonyle ou aminocarbonyle,
m vaut 1 ou 2, et
n vaut 1 ou 2, les substituants cités pouvant pour leur part être substitués par de l'halogène, par un reste hydroxy, alcoxy en C₁-C₆, acétoxy, acide carboxylique et acide sulfonique, et, dans le cas des restes aryles, ceux-ci peuvent également être substitués par un reste alkyle en C₁-C₄, et l'atome de O, qui est fixé au cuivre, est fixé en position 1 ou 2 du noyau naphtyle et se trouve toujours en position ortho par rapport au pont azoïque.

2. Colorants selon la revendication 1, dans lesquels
R représente un atome d'hydrogène, un groupe alkyle en C₁-C₄ ou alcoxy en C₁-C₄,
R¹ représente un atome d'hydrogène, un groupe alkyle en C₁-C₄, alkyl(en C₁-C₄)-carbonyle, alkylsulfonyle en C₁-C₄, phénylcarbonyle, benzyle, phénylsulfonyle ou benzylcarbonyle, dont les restes phényles peuvent être substitués par -SO₃H ou par -COOH, ou R¹ représente un groupe aminocarbonyle,
m vaut 1 ou 2,
n vaut 1 ou 2, et
la somme (m + n) vaut 2 ou 3.

3. Colorants selon la revendication 1, de formule 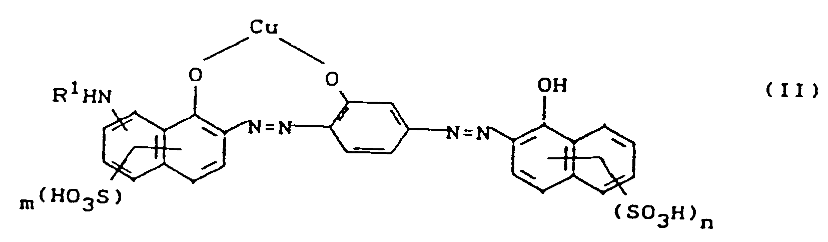 et leurs sels,
dans lesquels
R¹ représente un atome d'hydrogène, un groupe alkyle en C₁-C₂, alkyl(en C₁-C₂)-carbonyle, alkylsulfonyle en C₁-C₂ ou phénylcarbonyle, lequel peut être substitué par -SO₃H ou -COOH, ou bien R¹ représente un groupe aminocarbonyle,
m vaut 1 ou 2,
n vaut 1 ou 2, et
la somme (m + n) vaut 2 ou 3.

4. Colorants selon la revendication 1, de formule 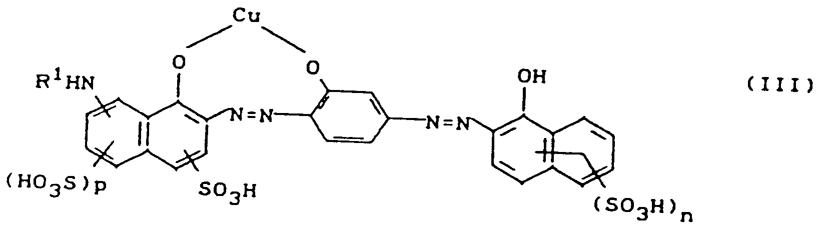 et leurs sels,
dans lesquels
R¹ représente un atome d'hydrogène, un groupe alkyle en C₁-C₄, alkyl(en C₁-C₄)-carbonyle, alkylsulfonyle en C₁-C₄, phénylcarbonyle, phénylsulfonyle ou benzylcarbonyle dont les restes phényles peuvent être substitués par -SO₃H ou par -COOH, ou bien R¹ représente un groupe aminocarbonyle,
n vaut 1 ou 2,
p vaut 0 ou 1,et
la somme (n + p) vaut 1 ou 2.

5. Colorants selon la revendication 4, de formule (III), dans laquelle
R¹ représente un groupe méthyle, éthyle, acétyle, propionyle ou phénylcarbonyle,
n vaut 1, et
p est nul.

6. Colorants selon la revendication 1, de formule

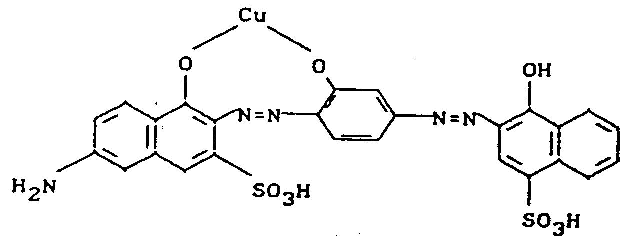

7. Procédé pour préparer des colorants selon la revendication 1, caractérisé en ce qu'on diazote des composés de formule 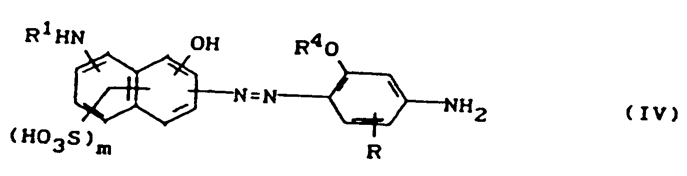 dans laquelle
R, R¹ et m ont le sens indiqué ci-dessus, et
R⁴ représente un groupe alkyle en C₁-C₄, et l'atome de O, qui est fixé sur le cuivre, est fixé en position 1 ou 2 du noyau naphtyle et se trouve toujours en position ortho par rapport au pont azoïque, et
on copule avec des composés de formule (V) 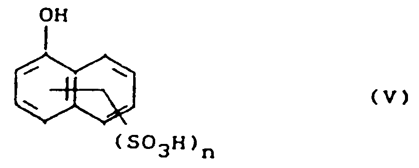 dans laquelle
n a le sens indiqué à la revendication 1,
et l'on traite par des sels de cuivre-(II) les colorants ainsi obtenus, de formule 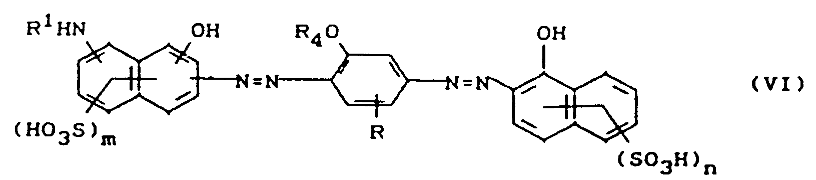 dans laquelle
R, R¹, m et n ont le sens indiqué à la revendication 1, et
R⁴ représente un groupe alkyle en C₁-C₄, et l'atome de O, auquel le cuivre est fixé, est fixé en position 1 ou 2 du noyau naphtyle et se trouve toujours en position ortho par rapport au pont azoïque.

8. Utilisation des colorants selon les revendications 1 à 6 pour teindre des matières contenant de la cellulose.

9. Utilisation des colorants selon les revendications 1 à 6 pour teindre du cuir.

10. Solutions concentrées de colorants, caractérisée en ce qu'elles contiennent un colorant de formule (I).
